# DEMANDE DE BREVET EUROPEEN

(11) **EP 2 426 652 A1**
(43) Date de publication de la demande: **07.03.2012**
(21) Numéro de dépôt: 10305956.4
(22) Date de dépôt: 06.09.2010
(51) Int. Cl.: G07F 7/10

(54) **Procédé simplifié de personnalisation de carte à puce et dispositif associé**

(71) Demandeur: Gemalto SA, 92190 Meudon (FR)
(72) Inventeur: Girard, Pierre, 13112, LA DESTROUSSE (FR); Choukri, Hamid, 83270, Saint Cyr sur Mer (FR)

(57) **Abrégé**

Procédé de personnalisation d'un dispositif électronique, utilisant un dispositif de chiffrement adaptable aux équipements standards certifiés.

Ce dispositif de chiffrement permettant d'assurer la confidentialité du transfert d'un code secret, depuis l'utilisateur vers un éventuel serveur de personnalisation

## Description

L'invention concerne un procédé simplifié de personnalisation de carte à puce.
L'invention porte en particulier sur un procédé permettant de saisir des informations de personnalisation au travers d'un lecteur de carte à puce standard, en maintenant un niveau de sécurité optimal.

Les dispositifs électroniques mobiles connaissent un essor qui va de pair avec leur miniaturisation. Aujourd'hui des dispositifs électroniques qui tiennent dans la poche, embarquent plus de puissance de calcul qu'un ordinateur de bureau d'il y a quelques années.
Cette évolution conjointe de la miniaturisation des dispositifs et de l'augmentation de leur capacité a permit d'ouvrir de nouveaux horizons en terme d'applications.
Aujourd'hui un téléphone portable, ou un baladeur musical, sont capables d'effectuer des opérations cryptographiques, de faire de l'encodage ou du décodage d'information.
Fer de lance de l'évolution des dispositifs électroniques embarqués, les puces électroniques connaissent cette évolution de leur application.
Aujourd'hui des puces électroniques sont embarquées dans un grand nombre de dispositifs. Nous les trouvons bien évidement dans des cartes à puces, mais également dans des documents d'identité électroniques, dans des autocollants intelligents, etc.
De telles puces (aussi appelées couramment « unité de calcul ») offrent des performances de sécurité particulièrement élevées, ce qui a permis d'orienter naturellement leur usage vers des applications sécuritaires, ou tout au moins sécurisées.
Ainsi les puces sont couramment utilisées pour des usages étatiques, bancaires, etc.
Toutes ces applications s'appuient sur une étape particulièrement importante : l'étape de personnalisation. C'est lors de cette étape que des données, et notamment des secrets vont être insérés dans la puce.
Parmi ces secrets, il en est certains qui peuvent être liés à l'utilisateur final. Un tel secret peut par exemple être un code secret. Le code secret, aussi appelé PINCODE (pour Personal Identification Number CODE) permet à l'utilisateur légitime de s'identifier auprès de la puce. Dans le cas d'une carte bancaire, préalablement à une transaction, il est courant de demander à l'utilisateur de fournir son code secret, afin d'être sûr que c'est bien lui qui demande ladite transaction.
Pour réaliser cette opération :
- la carte est insérée dans un terminal,
- le terminal demande à l'utilisateur d'entrer son code secret
- le terminal envoie ce code saisi, à la carte en lui demandant de vérifier celui ci,
- la carte vérifie ce code, et informe le terminal du résultat de cette vérification.
Afin de pouvoir vérifier le code qui lui est soumis, il est indispensable que la carte connaisse tout ou partie de ce code. Dans un mode naïf d'implémentation, la carte possède le code en tant que tel, et le compare avec le code saisi. Dans un mode plus avancé, la carte possède certaines informations sur le code (par exemple un haché) et recherche les mêmes informations dans le code saisi.
Dans tous les cas, la carte a besoin de connaitre tout ou partie du code afin de pouvoir le vérifier.

La grande diversification des dispositifs électroniques, ainsi que leurs applications a induit un accroissement remarquable du nombre de codes secrets à retenir par chaque utilisateur. Ce phénomène a, entre autre, favorisé le besoin, par les utilisateurs de choisir eux même leurs codes secrets, afin d'en faciliter la mémorisation.

Dès lors, le problème est de faire intervenir l'utilisateur dans un processus de personnalisation extrêmement sécurisé, et le plus souvent centralisé dans des lieux protégés.

La première solution envisagée a été d'établir une communication distante entre le centre de personnalisation et l'usager. Pour cette étape, l'utilisateur étant généralement présent dans une agence, par exemple une agence bancaire ou gouvernementale, cela équivalait a établir une communication sécurisée entre le centre de personnalisation et l'ensemble des agences.
Cette solution a été rapidement écartée de par le risque majeur que représente un tel nombre d'entrées potentielles dans un système sécurisé de personnalisation.

La deuxième solution étudiée a été l'équipement de chacune des dites agences, d'une unité de chiffrement sécurisée, généralement appelée HSM pour Hardware Security Module. Ce module physique de sécurité permet de chiffrer des données dans un environnement sécurisé, et ainsi de pouvoir ultérieurement les transmettre.
Plus largement un HSM (*Hardware Security Module*) (Module Matériel de Sécurité) est un appareil considéré comme inviolable offrant des fonctions cryptographiques. Il s'agit d'un matériel électronique offrant un service de sécurité qui consiste généralement à générer, stocker utiliser et protéger des clefs cryptographiques.

Dans notre cas, les données à chiffrer sont des données issues de l'utilisateur final, par exemple son code secret.
Une fois les données transmises au centre de personnalisation, celui-ci possède les ressources pour les déchiffrer (le plus souvent un autre HSM), et ainsi pouvoir analyser et traiter les données.
Le problème rencontré par cette solution réside dans le coût extrêmement élevé de ces HSM.
De plus l'utilisation de nouveaux dispositifs dans la chaine de personnalisation nécessite la re-certification de la dite chaine. En effet, ces processus extrêmement sécurisés subissent un ensemble de tests et de validation appelés « certification ». Un tel « label », assure tous les acteurs que des experts ont vérifié la sécurité de l'ensemble du système.
Or l'insertion des HSM, ou de tout autre dispositif dans cette chaine nécessite une re-certification, ce qui coûte également cher.

La présente invention tend donc à fournir un procédé de personnalisation, incluant l'utilisateur final, sans modifier les dispositifs de la chaine de personnalisation.

Dans un premier temps, l'invention décrit un procédé de personnalisation d'un dispositif électronique dit cible, utilisant un terminal sécurisé, ainsi que un dispositif électronique communiquant dit ordinateur, apte a exécuter un programme informatique dit programme de personnalisation, ce procédé comprenant au moins les étapes de :
- Insertion, dans le terminal, d'un dispositif électronique sécurisé dit dispositif de chiffrement
- Envoi, par le programme de personnalisation, d'une requête au travers de laquelle il demande au terminal de soumettre un code au dispositif de chiffrement
- Saisie d'un code secret dit « code fournit » par l'utilisateur, sur le clavier du terminal, et transmission de celui-ci au dispositif au travers d'une requête REQ
- Enregistrement du code fournit dans une mémoire du dispositif de chiffrement
- Envoi, par le programme de personnalisation, d'une commande « Get-encrypted-Pin » au dispositif de chiffrement, par l'intermédiaire du terminal
- Chiffrement, par le dispositif de chiffrement, du code fournit, grâce à un algorithme cryptographique ALG et une clef K pour obtenir un « code fournit chiffré »
- Transmission de ce code fournit chiffré au programme de personnalisation

La requête REQ peut être une commande de vérification du code fournit.
Ce code fournit chiffré peut ensuite être transmis à un serveur de personnalisations distant.
Ce procédé de personnalisation peut comprendre en outre une étape de vérification, au cours de laquelle, lorsque le terminal de chiffrement reçoit le code fournit, au moins une règle de sécurité est analysée.
Le dispositif de sécurité peut renvoyer au programme de personnalisation, par l'intermédiaire du terminal, une réponse différente en fonction du résultat de l'application de cette règle de sécurité. Cette règle de sécurité peut par exemple consister en la vérification du format du code fournit

Dans un second temps, l'invention décrit également un dispositif électronique sécurisé comportant une mémoire non volatile, une clef cryptographique K, un algorithme cryptographique ALG, caractérisé en ce que il possède des moyens pour **:**
- enregistrer, dans la mémoire interne un code fournit dans le cadre d'une commande de vérification de ce code fournit
- chiffrer ce code fournit par l'application de l'algorithme ALG et de la clef K pour obtenir un « code fournit chiffré »
- envoyer ce « code fournit chiffré » en réponse à une commande « get encrypted pin »

Ce dispositif peut comporter des moyens permettant de changer de contexte, à chacun des contextes étant associé un traitement spécifique de la commande permettant de vérifier l'exactitude d'un code fournit.
Ce dispositif peut comporter également, dans une mémoire non volatile, au moins une règle de sécurité. Cette règle de sécurité pouvant par exemple consister en la vérification que la taille du code fournit est comprise entre des bornes Bmin et Bmax prédéfinies, en la vérification que les caractères qui composent le code fournit ne sont pas tous identiques, ou bien encore en la vérification que les caractères qui composent le code fournit ne forment pas une suite arithmétique de raison un.

Un avantage de l'invention est qu'une adaptation de la chaine de personnalisation selon l'invention se fait pour un coût très minime. En effet, le coût des dispositifs d'administration aussi appelés dispositifs de chiffrement), et notamment de cartes à puce dans le cas ou ce format est préféré, est sans commune mesure à l'équipement de l'ensemble des agences en HSM.

D'autres caractéristiques et avantages de l'invention ressortiront clairement de la description qui en est faite ci-après, à titre indicatif et nullement limitatif, en référence aux dessins annexés dans lesquels **:**

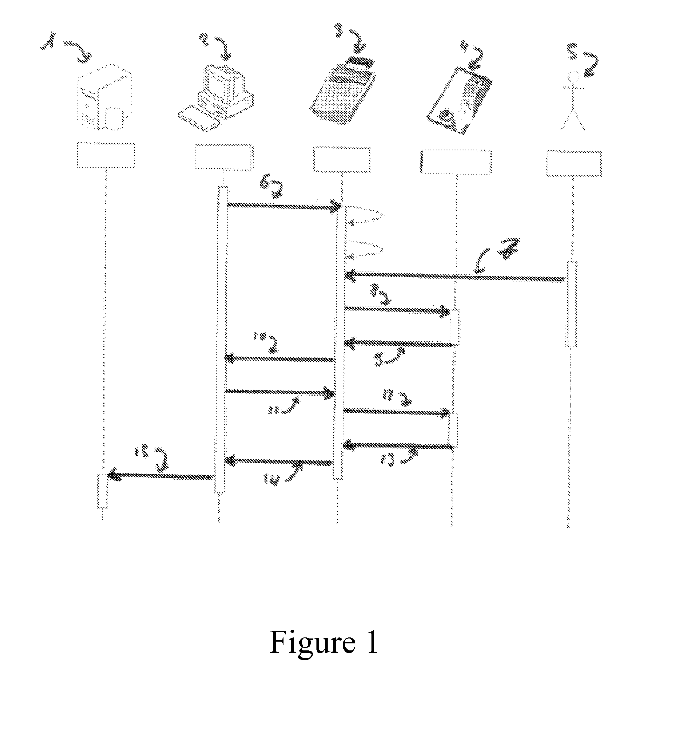

- La figure 1 représente un diagramme de séquences illustrant le procédé selon l'invention.
Aujourd'hui, la quasi-totalité des points de vente susceptibles de mettre en oeuvre le procédé de personnalisation selon l'invention, est déjà muni d'au moins un ordinateur 2, d'un lecteur de cartes à puce 3, ainsi que d'une connexion numérique.

La présente invention propose l'utilisation d'un dispositif électronique sécurisé 4 dit « dispositif de chiffrement », par exemple une carte à puce. Ce dispositif de chiffrement est apte à recevoir au moins 2 commandes : une commande 8 permettant de vérifier l'exactitude d'un code fournit 7, et une commande 12 « get-encrypted-pin ».
La commande 8 de vérification peut par exemple être la commande « verify pin » (ISO 7816-4):
La commande Verify pin lance la comparaison, dans la carte, de données de vérification envoyées par le dispositif d'interface avec des données de référence stockées dans la carte, par exemple un mot de passe.

La commande 12 « Get Encrypted Pin » va permettre à la carte de retourner 13 la valeur chiffrée du code fournit 7.
Cette commande va, de manière préférentielle, être envoyée par l'ordinateur 2 à travers du lecteur 3. Si nécessaire, la commande sera encapsulée dans une commande générique du lecteur pour permettre la communication avec la carte.

Dans un mode d'implémentation la commande Get Encrypted Pin va pouvoir retourner le PIN chiffré si et seulement si la commande de vérification 8 a été préalablement exécutée.

Le dispositif de chiffrement 4 est toutefois capable de traiter ces commandes de manière originale.
En effet dans un mode de fonctionnement dit de personnalisation selon l'invention, ledit dispositif de chiffrement, à réception de la commande « verify pin », enregistre le pincode fournit en paramètre dans une mémoire interne. Il fournit en retour une réponse arbitraire, par exemple « OK » signifiant que le verifypin c'est déroulé correctement et que le résultat est positif.

A réception de la commande 12 Get-Encrypted-Pin, le dispositif de chiffrement chiffre ledit pincode fournit 7, avec un algorithme cryptographique ALG, et une clef K.
Ce chiffrement peut se faire avec l'aide de tout moyen de chiffrement connu de l'homme de l'art, notamment par l'utilisation d'un algorithme symétrique ou asymétrique.

La cryptographie symétrique, ou cryptographie à clé secrète est basée sur la connaissance partagée d'un secret entre deux acteurs.
Les algorithmes utilisés, tels que par exemple le DES, 3DES, AES, ... s'appuient sur le fait qu'il est presque impossible, connaissant le chiffré d'un message, de retrouver le message clair sans connaitre la clé utilisée pour le chiffrement.

La cryptographie asymétrique, ou cryptographie à clé publique est fondée sur l'existence de fonctions à sens unique.
Ainsi, la cryptographie à clé publique est un procédé asymétrique utilisant une paire de clés. Ces clés, généralement baptisées « clé publique » et « clé privée », sont construites de telle manière que, ce qui est chiffré avec l'aide d'une de ces clés ne peut être déchiffré que par la seconde.
On peut noter qu'il est impossible de deviner la clé privée à partir de la clé publique.

La génération des couples clé publique/clé privée, ne fait pas l'objet de la présente invention. Tous les procédés décrits par l'état de l'art, ou à venir, qui permettent d'obtenir un tel couple de clés s'appliquent à la présente invention.
Les clés de type « chiffrement de groupe », qui permettent d'associer à une clé publique, plusieurs clés privées, chacune permettant de déchiffrer tout ou partie de ce qui a été chiffré avec la clé publique, s'appliquent parfaitement à la présente invention.
En retour de la commande get encrypted pin, le dispositif de chiffrement retourne donc ledit pincode fournit chiffré.

Dans un mode préféré d'implémentation le dispositif de chiffrement 4 comporte des mécanismes de sécurité et d'authentification tels que ceux connus de l'homme de l'art, permettant de s'assurer de l'identité de l'utilisateur.
Une solution particulièrement adaptée à la présente invention consiste en la création de contextes d'utilisation. En effet, en début de session, par exemple lors de la mise sous tension du dispositif de chiffrement, la commande « verify pin » a un fonctionnement dit standard (contexte standard), conforme à la description qui en est faite dans la norme 7616-4 (ou ETSI102-221). Une fois l'utilisateur authentifié avec succès, le dispositif peut passer, automatiquement ou sur commande, dans un contexte dit de chiffrement selon l'invention. Dans ce mode d'utilisation, la commande « verify pin » a un fonctionnement selon l'invention tel que décrit plus haut.

Dans un exemple d'utilisation illustré par la figure 1, par exemple un utilisateur 5 se rend au guichet d'un établissement bancaire afin de choisir le pincode d'une carte bancaire à venir.
Le conseiller bancaire en charge de cette opération de personnalisation, insère sa propre carte de chiffrement 4 dans le lecteur de carte à puce 3.
Sur l'ordinateur 2 auquel ledit lecteur de carte à puce est connecté, un programme de personnalisation selon l'invention est exécuté.
Ce programme envoie au lecteur de carte une commande de vérification du pincode 6 (verify pin). Le lecteur bascule en mode sécurisé, et attend un pincode candidat.
L'utilisateur 5 entre, sur le clavier sécurisé du lecteur de carte, le pincode 7 qu'il souhaite voir insérer dans sa future carte bancaire.
Ce pincode fournit 7 est transmis à la carte de chiffrement en paramètre de la commande de vérification de pincode 8.
La carte de chiffrement 4 enregistre dès lors dans sa mémoire interne ce pincode fournit 7.
Dans un mode simple d'implémentation de l'invention, la carte de chiffrement retourne une réponse arbitraire 9, par exemple OK.
Dans un mode plus évolué d'implémentation de l'invention, la carte peut avantageusement contenir un ensemble de règles de vérification du pincode fournit, afin de s'assurer qu'il respecte des règles de sécurité prédéfinies. Par exemple la carte peut vérifier que le nombre de chiffres qui composent le pincode fournit est compris entre une borne Bmin et une borne Bmax, prédéfinies. De telles bornes peuvent être prédéfinies dans la règle de sécurité, ou bien être transmises par le programme de personnalisation exécuté sur ledit ordinateur, par exemple en paramètre de la commande verify-pin.
De telles règles de sécurité peuvent également vérifier si tous les chiffres qui composent le pincode fournit ne sont pas identiques, ou bien si ils ne forment pas une suite mathématiques évidente, par exemple une suite arithmétique de raison un, etc.

Dans ce mode d'implémentation, la carte retournera, en réponse à la commande de vérification du pincode, ok si les règles sont respectées, si non, KO. Cette réponse est transmise, par le lecteur de carte, au programme de personnalisation selon l'invention qui tourne sur l'ordinateur.

Dans un mode d'implémentation, la carte de chiffrement peut, suite à une vérification positive de pincode, basculer dans un troisième contexte, a savoir un contexte de confirmation.
Dans ce contexte, la carte va attendre au moins une nouvelle commande de vérification de pincode, et vérifier que les pincodes fournis sont bien identiques. Cette nouvelle vérification de pincode sera considéré comme réussie si le pincode fournit est bien identique à celui précédemment fournit. A des fins d'optimisation, et dans le cas ou des règles de sécurité sont appliquées au pincode fournit, ces règles peuvent avantageusement n'être appliquées que sur le premier pincode fournit, les suivants devant uniquement lui être identiques.
Ce contexte permet d'éviter les erreurs de frappe dans la saisie du pincode.

Pour des raisons de sécurité, un mode préféré d'implémentation de l'invention comprend, a ce stade du procédé, un retour dans le contexte standard, afin de confirmer de nouveau l'identité de l'employé possesseur de la carte de chiffrement.

Dès lors, le programme de personnalisation tournant sur l'ordinateur 2, fait, au travers du lecteur de carte à puce 3, une requête « get encrypted pincode » 11 12. A réception de cette commande, la carte de chiffrement 4 retourne le pincode fournit, chiffré 13 avec un algorithme cryptographique, et une clef.

De manière avantageuse, l'ensemble des mécanismes connus de l'homme de l'art permettant d'optimiser la sécurité du chiffrement peuvent être mis en oeuvre. Notamment une dérivation de la clef, afin de ne pas systématiquement utiliser la même clef, l'insertion d'aléas dans le calcul de chiffrement, ou bien encore l'utilisation d'OTP (« one time password ») dans ledit chiffrement. Un OTP est une valeur générée, qui n'est utilisée qu'une fois.
Tous les mécanismes permettant d'augmenter la sécurité du systeme, tout en garantissant le déchiffrement ultérieur de la donnée par un dispositif habilité sont implémentables.

Ce chiffrement permet que le pincode saisit ne soit jamais en clair, à l'extérieur de la carte. Ainsi, seul l'utilisateur connait la valeur de ce pincode. Le conseiller financier effectuant l'opération n'a aucune possibilité pour l'obtenir.
Ce pincode chiffré 13 est transmit par la carte de chiffrement au lecteur de carte a puce, qui lui même le transmet 14 au programme de personnalisation, tournant sur l'ordinateur.
Dès lors, l'ordinateur peut transmettre 15 ce pincode chiffré au serveur informatique 1 en charge de la personnalisation définitive de la future carte à puce, dite cible. Ce serveur 1 possède les moyens cryptographiques nécessaires au déchiffrement dudit pincode, dans des conditions optimales de sécurité. Un HSM, relié à ce serveur, (Hardware Security Module) est particulièrement adapté à cette étape du procédé.
Un HSM est un dispositif électronique sécurisé, offre un maximum de garanties de confidentialité, et de sécurité.

Cette transmission peut se faire par tout moyen connu de l'homme de l'art permettant l'échange de données numérique. Dans un mode préféré, cette transmission se fait dans un mode sécurisé, au travers des réseaux.

## Revendications

1. Procédé de personnalisation d'un dispositif électronique dit cible, utilisant un terminal sécurisé (3), ainsi que un dispositif électronique communiquant (2) dit ordinateur, apte a exécuter un programme informatique dit programme de personnalisation, **caractérisé en ce que** il comprend les étapes de :
- Insertion, dans ledit terminal (3), d'un dispositif électronique sécurisé (4) dit dispositif de chiffrement
- Envoi, par le programme de personnalisation, d'une requête (6) au travers de laquelle il demande au terminal de soumettre un code audit dispositif de chiffrement
- Saisie d'un code secret dit « code fournit » (7) par l'utilisateur (5), sur le clavier dudit terminal (3), et transmission de celui-ci au dispositif de chiffrement (4) au travers d'une requête REQ (8)
- Enregistrement dudit code fournit (7) dans une mémoire dudit dispositif de chiffrement (4)
- Envoi, par le programme de personnalisation (2), d'une commande (11) « Get-encrypted-Pin » au dispositif de chiffrement (4), par l'intermédiaire dudit terminal (3)
- Chiffrement, par ledit dispositif de chiffrement (4), dudit code fournit (7) grâce à un algorithme cryptographique ALG et une clef K pour obtenir un « code fournit chiffré »
- Transmission (14) dudit code fournit chiffré (13) audit programme de personnalisation (2).

2. Procédé de personnalisation selon la revendication 1, **caractérisé en ce que** ladite requête REQ (8) est une commande de vérification dudit code fournit (7).

3. Procédé de personnalisation selon l'une des revendications 1 ou 2, **caractérisé en ce que** ledit code fournit chiffré (13) est transmis à un serveur de personnalisation distant (1).

4. Procédé de personnalisation selon l'une des revendications 1 à 3, **caractérisé en ce qu'**il comprend en outre une étape de vérification, au cours de laquelle, lorsque ledit dispositif de chiffrement (4) reçoit ledit code fournit (7), au moins une règle de sécurité est analysée.

5. Procédé de personnalisation selon la revendication 4, **caractérisé en ce que** ledit dispositif de chiffrement (4) renvoie audit programme de personnalisation (2), par l'intermédiaire dudit terminal (3), une réponse différente en fonction du résultat de l'application de ladite règle de sécurité.

6. Procédé de personnalisation selon l'une des revendications 4 ou 5, **caractérisé en ce que** ladite règle de sécurité consiste en la vérification du format dudit code fournit.

7. Dispositif électronique sécurisé (4) comportant une mémoire non volatile, une clef cryptographique K, un algorithme cryptographique ALG, **caractérisé en ce que** il possède des moyens pour :
- enregistrer, dans ladite mémoire interne un code fournit dans le cadre d'une commande de vérification dudit code fournit
- chiffrer ledit code fournit par l'application dudit algorithme ALG et de ladite clef K pour obtenir un « code fournit chiffré »
- envoyer ledit « code fournit chiffré » en réponse à une commande « get encrypted pin ».

8. Dispositif électronique sécurisé (4) selon la revendication 7, **caractérisé en ce qu'**il comporte des moyens permettant de changer de contexte, à chacun des dits contextes étant associé un traitement spécifique de la commande permettant de vérifier l'exactitude d'un code fournit.

9. Dispositif électronique sécurisé selon l'une quelconque des revendications 7 ou 8, **caractérisé en ce qu'**il comporte, dans une mémoire non volatile, au moins une règle de sécurité.

10. Dispositif électronique sécurisé selon la revendication 9, **caractérisé en ce que** ladite règle de sécurité consiste en la vérification que la taille dudit code fournit est comprise entre des bornes Bmin et Bmax prédéfinies.

11. Dispositif électronique sécurisé selon la revendication 9, **caractérisé en ce que** ladite règle de sécurité consiste en la vérification que les caractères qui composent ledit code fournit ne sont pas tous identiques.

12. Dispositif électronique sécurisé selon la revendication 9, **caractérisé en ce que** ladite règle de sécurité consiste en la vérification que les caractères qui composent ledit code fournit ne forment pas une suite arithmétique de raison un.
